# EUROPÄISCHE PATENTSCHRIFT

(11) **EP 0 816 094 B1**
(45) Veröffentlichungstag und Bekanntmachung des Hinweises auf die Patenterteilung: **07.11.2001**
(21) Anmeldenummer: 97110566.3
(22) Anmeldetag: 27.06.1997
(51) Int. Cl.: B41J 2/16, C09D 183/04, C09D 183/06

(54) **Antitrielbeschichtung für Tintenstrahldruckköpfe**
Hydrophobic coating for ink jet printhead
Revêtement hydrophobe pour tête d'impression à jet d'encre

(30) Priorität: 28.06.1996 DE 19626052; 26.06.1997 WO PCT/DE97/01339
(43) Veröffentlichungstag der Anmeldung: 07.01.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: Popall, Michael, Dr., 97072 Würzburg (DE); Schulz, Jochen, Dr., 97209 Veitshöchheim (DE); Olsowski, Birke-E., 97209 Veitshöchheim (DE); Martin, Adelheid, 97957 Wittighausen (DE); Bühler, Karl, 80796 München (DE)
(74) Vertreter: Olgemöller, Luitgard, Dr.

(56) Entgegenhaltungen:
- EP-A- 0 367 438
- EP-A- 0 716 051
- EP-A- 0 799 832
- WO-A-90/14958
- WO-A-96/06895
- DE-C- 19 613 650

## Beschreibung

Die vorliegende Erfindung betrifft Tintenstrahldruckköpfe mit Antitrielbeschichtung. Unter "Antitrielbeschichtung" ist eine gegenüber der Tinte hydrophobe Beschichtung, insbesondere eine Düsenplattenbeschichtung, zu verstehen.

Wesentliche Voraussetzung für ein sauberes Schriftbild eines mit Tintenstrahl arbeitenden Druckers ist eine symmetrische Tropfenform, d.h. die Tinte darf beim Austritt aus dem Druckkopf nicht einseitig beeinflußt werden. Da Tintenstrahl-Druckköpfe üblicherweise in Sandwich-Bauweise erstellt werden und aus sehr unterschiedlichen Materialien bestehen können (Silicium-Wafer / kanalartig strukturiertes Polymer (PARAD) / Polyimid-Layer / Erdalkaliglas) wird bisher üblicherweise der Druckkopf mit einer Fluorverbindung bedampft, um eine einheitliche Antitrielschicht an den Tintenaustrittsdüsen zu erzeugen. Das Bedampfungsverfahren ist sehr aufwendig und führt zu unbefriedigenden Ergebnissen. Außerdem ist Voraussetzung, daß die vom Sägen rauhe Stirnfläche des Tintenstrahldruckkopfs vor dem Aufdampfen poliert, d.h. geläppt worden ist, also durch ein aufwendiges, kosten- und zeitintensives Verfahren geglättet wurde.

Insbesondere im Hinblick darauf, daß inzwischen "Einmal-Druckköpfe" im Handel sind, die jeweils zusammen mit der Tintenkartusche ausgetauscht werden, ist das oben beschriebene Bedampfungsverfahren einschließlich der dafür erforderlichen Voraussetzungen zu teuer.

Aus der WO 96/06895 ist eine Sustratbeschichtung bekannt, mit. der gewünschte Oberflächeneigenschaften eingestellt werden können. Hierfür werden vernetzbare Siliciumverbindungen eingesetzt, die zwei verschiedene Gruppen X, X' an verschiedenen Silicumatomen tragen. Die Gruppe X' ist dabei für die gewünschten Oberflächeneigenschaften verantwortlich, während die Gruppe X derart ausgestaltet sein soll, daß sie mit dem Substrat reagieren kann, um eine sehr feste Haftung zu erzielen. Die Mischung der Verbindungen wird einer partiellen Hydrolyse unterworfen und sodann auf dem Substrat aufgetragen, wodurch es zu einen "self assembling" kommen soll, bei dem sich die Gruppe X zum Untergrund ausrichten und mit diesem reagieren, während sich die Gruppen X' parallel auf der Oberfläche anordnen. Dabei kommt es zu einer Kondensation der unterschiedlichen Silane; eine organische Polymerisationsreaktion ist nicht offenbart.

Die EP 367 438 A1 offenbart eine hydrophobierende Beschichtung für Tintenstrahlköpfe, hergestellt durch Aufbringen einer ersten Schicht von am Untergrund haftenden Silanen, die sodann durch Kondensation vernetzt werden, auf die eine zweite Schicht aus Fluorsilan mit hydrolysierbaren Gruppen aufgetragen wird. Die für die erste Schicht eingesetzten Silane können ggf. eine nicht-hydrolysierbare Gruppe aufweisen, die eine π-π-Bindung zum Substrat ausbilden kann, z.B. eine Allylgruppe. Für eine organische Polymerisation ist diese Gruppe jedoch nicht vorgesehen.

Es ist daher Aufgabe der Erfindung, ein auf dem Substratmaterial gut haftendes, hinsichtlich der Tinte hydrophobes Antitriel-Beschichtungsmaterial für den Tintenstrahldruckkopf aufzufinden, welches unaufwendig aufzubringen und kostengünstig ist.

Diese Aufgabe wird durch die Bereitstellung eines Tintenstrahldruckkopfes gemäß Anspruch 1 und in besonders vorteilhafter Weise gemäß den Unteransprüchen 2 bis 6 gelöst.

Bevorzugt werden dabei die Verbindungen I als einziger oder Hauptbestandteil für die Herstellung des polymeren Werkstoffes eingesetzt.

Die Antitrielbeschichtung der vorliegenden Erfindung eignet sich für jede Art von Düsenaustrittsseiten (z.B. Düsenplatte, bei Sandwich-Aufbau, Sideshooter, Edgeshooter, Backshooter). Sie ist chemisch inert gegenüber den verschiedenen Tintensystemen, u.a., weil sie bei Tintenkontakt nicht quillt. Je nach einzusetzendem Tintensystem können die Benetzungseigenschaften durch Variation der entsprechenden chemischen Gruppen leicht optimal eingestellt bzw. angepaßt werden.

Die Ausgangsmaterialien lassen sich problemlos lagern und sind gut umweltverträglich.

Durch das Aufbringen eines Werkstoffs gemäß Anspruch 1 als Antitrielschicht wird eine gute Haftung auf den für die Köpfe verwendeten Materialien erzielt; eine gute Verträglichkeit mit der Wärmedehnung des Schichtverbundes führt dazu, daß die aufgetragenen Schichten auch bei längerer Belastung nicht abplatzen. Randwinkel gegenüber Wasser im Bereich von 80° bis über 90°, in einzelnen Fällen bis über 100°, werden erzielt. Überraschenderweise konnte zusätzlich gefunden werden, daß bei erfindungsgemäß beschichteten Tintenstrahldruckköpfen die Rauhigkeit der Stirnfläche, die vom Wafer-Sägen resultiert, planarisiert wird. Eine pinhole-freie Applizierbarkeit ist ebenfalls gegeben.

Insbesondere durch ein Verfahren gemäß Anspruch 11 wird in besonders vorteilhafter Weise sichergestellt, daß die Kanäle selbst nicht mit der Beschichtung verklebt werden.

Polymere Werkstoffe wie in Anspruch 1 definiert gehören zur Werkstoffklasse der sogenannten ORMOCERE (ORganically MOdified CERamics). Sie können zwischen anorganischen und organischen Polymeren eingeordnet werden. Die Herstellung erfolgt ausgehend von Alkoxiden des Siliciums und ggf. ergänzend anderer Metalle, die ganz oder teilweise durch organisch polymerisierbare Substituenten modifiziert sind. Durch Hydrolyse und Kondensation wird der anorganische Teil des Netzwerks aufgebaut, durch Polymerisation, Polyaddition oder andere organische Kupplungsreaktionen der organische Teil (aus reaktiven organischen Substituenten).

Folgende Systeme erwiesen sich als besonders geeignet für den Einsatz als polymerer Werkstoff für die Antitrielbeschichtung:

**Tabelle 1**

| G (Mol-%) | P(Mol-%) | P2(Mol-%) | M(Mol-%) | T(Mol-%) |
|---|---|---|---|---|
| 30-40 | - | 10-20 | 30-40 | 0-5 |
| - | 70-90 | - | 15-25 | - |
| - | 80-95 | - | 5-15 | - |
| - | 65-75 | - | 20-40 | - |
| - | 35-45 | 25-35 | 20-40 | - |
| - | 50-70 | 25-35 | 5-15 | - |
| (G = Glycidoxypropyltrimethoxysilan; P = Phenyltrimethoxysilan; P2 = Diphenylsilandiol; M = Methacryloxypropyltrimethoxysilan; T = Tetraethoxysilan). | | | | |

Der Werkstoff wird bevorzugt hergestellt, indem man zuerst die gewünschten Silane, ggf. mit weiteren Zusätzen (z.B. Netzwerkbildnern oder modifizierenden Stoffen), vermischt und, ggf. unter Erwärmen, durch Wasserzugabe hydrolysiert. Die Wasserzugabe kann langsam erfolgen, so daß dem System zuerst unterstöchiometrische Mengen zugeführt werden.

In einer Ausgestaltung der Erfindung enthalten die Systeme weiterhin eine Aminkomponente, z.B. N-Methyldiethanolamin (NMDA) und/oder Diethylentriamin (DETA). Diese kann als Beschleuniger wirken. Bevorzugt werden die beiden vorgenannten Substanzen im Verhältnis von etwa 1:1 und in einer Menge von etwa 0.5 - 2, bevorzugt etwa 1 Massen-%, bezogen auf unverdünnten Lack, eingesetzt.

Der wie vorstehend beschrieben hergestellte, flüssige Lack wird ggf. auf einen gewünschten Feststoffgehalt gebracht und kann nachfolgend als solcher oder, was bevorzugt ist, in Kombination mit einem Lösungsmittel (z.B. Ethanol, Aceton, Propylacetat oder dergleichen) auf den Druckkopf aufgetragen werden. Bevorzugtes Auftrage-Verfahren ist Aufsprühen. Alternative Möglichkeiten sind z.B. Aufschleudern (spin-coating), Aufrollen oder Tampon-Print. Weitere Möglichkeiten sind Stempelauftrag (Offsetdruck), Pinselauftrag und Tauchauftrag. Die Art des Auftrages wird üblicherweise so ausgewählt, daß eine optimale Anpassung an die Kopfgeometrie und den Kopfherstellablauf möglich ist. Nach dem Auftrag wird der Werkstoff ausgehärtet (organisch polymerisiert). Dies kann beispielsweise auf photochemischem und/oder thermischem Wege erfolgen, wobei selbstverständlich für eine photochemische Aushärtung dem Lack vor dem Auftrag Photoinitiatoren zugesetzt werden müssen. Beim Sprühauftrag kann mit einem Sprühvordruck von beispielsweise 0,5 bis 2 bar gearbeitet werden (Düsenquerschnitte: 0,1 bis 0,3 mm). Der Sprühabstand kann beispielsweise 3 bis 10 cm, insbesondere etwa 6 cm betragen. Um ein Verkleben der feinen Tintenstrahlaustrittsöffnungen zu vermeiden, kann durch jeden Druckkopf Stickstoff, z.B. mit einem Gegenvordruck von 0,5 bar, geleitet werden.

Geeignete Photoinitiatoren sind dem Fachmann bekannt. Beispielsweise können radikalisch-ionische Initiatoren wie Cyracure UVI 6974 von Union Carbide verwendet werden. Der Zusatz von Aminen wie N-Methyldiethanolamin und/oder Diethylentriamin kurz vor dem Auftrag ist besonders vorteilhaft, auch bei Verwendung radikalischer Photostarter, wie z. B. Quantacure ITX (Rahn Chemie).Die Photoinitiatoren können beispielsweise in einer Menge von 1 - 5 Massen-%, bevorzugt ca. 2 Massen-%, bezogen auf den unverdünnten Lack, eingesetzt werden.

Der Feststoffgehalt des im ersten Schritt hergestellten Lackes ist variabel. Beispielsweise kann er zwischen 30 und 80% betragen. Die Einstellung erfolgt bevorzugt durch Einrotieren. Auch die anschließende Verdünnung mit Lösungsmittel ist variabel und hängt von verschiedenen zu wählenden Faktoren ab, beispielsweise von der Art des Auftrags. Beispielsweise kann der Lack mit Lösungsmittel auf einen End-Feststoffgehalt von etwa 5 bis 30% gebracht werden.

Ausgezeichnete Schichtqualitäten erhält man mit einem Lack, der auf etwa 60 - 70 Gew.-% Feststoffgehalt einrotiert und dann mit Lösungsmittel (z.B. Propylacetat) auf ca. 10 Gew-% Feststoffgehalt verdünnt wurde.

Erfindungsgemäß ist es auch möglich, eine zweite Hydrophobierungs-Schicht aufzubringen, z.B. aus einem fluorierten hydrolysierten Silan. So kann ein Perfluoralkyltriethoxysilan verwendet werden. Bevorzugt werden beide Schichten zusammen ausgehärtet (thermisch und/oder photochemisch).

Weiterhin kann die erfindungsgemäße Antitrielschicht aus mehreren Schichten des erfindungsgemäßen Werkstoffs aufgebaut sein, die nacheinander aufgebracht werden und identisch oder unterschiedlich zusammengesetzt sind.

### Beispiele:

### 1. Ausgangeverbindungen für die Lacke

| System | G (Mol-%) | P(Mol-%) | P2(Mol-%) | M(Mol-%) | T(Mol-%) |
|---|---|---|---|---|---|
| GMP2T | 38,6 | - | 18,9 | 38,6 | 3,9 |
| PM82 | - | 80 | - | 20 | - |
| PM91 | - | 90 | - | 10 | - |
| PM73 | - | 70 | - | 30 | - |
| PP2M433 | - | 40 | 30 | 30 | - |
| PP2M631 | - | 60 | 30 | 10 | - |

### 2. Lack-Synthese

### 2.1 Synthese von GMP2T

Ausgangsverbindungen:
1. 0,4 mol γ-Glycidyloxypropyltrimethoxysilan (= 38,6 mol-%)
2. 0,4 mol γ-Methacryloxypropyltrimethoxysilan(= 38,6 mol-%)
3. 0,2 mol Diphenylsilandiol (= 18,9 mol-%)
4. 0,04 mol Tetraethoxysilan (= 3,9 mol-%)
5. 2,37 mol Wasser

Die Komponenten 1. - 4. werden vorgelegt und bei Raumtemperatur 18 h gerührt. Anschließend wird innerhalb von 90 min die Suspension auf ca. 70 °C erwärmt. Nachdem die Suspension klar geworden ist, wird 1/4 der Wassermenge unter Beibehaltung der Heizung addiert. In Zeitabständen von ca. 20 min wird die restliche Wassermenge hinzugegeben (jeweils 1/4). Nach der vollständigen Wasserzugabe wird bei 70 °C 1 h weitergerührt. Anschließend wird die Heizung entfernt und nach dem Abkühlen ist der Lack gebrauchsfertig.

### 2.2 Die anderen Lacke werden analog zu GMP2T hergestellt.

### 3. Erzeugen der Antitrielschicht auf dem Tintenstrahldruckkopf.

### 3.1 Herstellung des aufzubringenden Materials.

Lacke der oben beschriebenen Zusammensetzungen werden durch Einrotieren auf einen Feststoffgehalt von 66,5 Gew.-% eingestellt und mit Ethanol oder Propylacetat verdünnt auf 5 - 40% Gew.-%-Feststoffgehalt.

### 3.2 Auftragen der Beschichtung auf den Druckkopf

Mit einem Airbrush (Typ Aerostar 105 der Fa. Fischer) wird der Lack mit einem Sprühdruck von 0,5 bar oder 2,0 bar (auf Düsenquerschnitt 0,2 mm) bei einem Sprühabstand von etwa 6 cm auf die Stirnseiten von fertig montierten Tintenstrahldruckköpfen aufgesprüht. Durch jeden Kopf wird Stickstoff mit einem Gegenvordruck von 0,5 bar geleitet. Anschließend werden alle Systeme photochemisch gehärtet (Initiator: Cyracure UVI 6974 von Union Carbide).

Ein Teil der Lacke enthält zusätzlich N-Methyldiethanolamin (NMDA) und Diethylentriamin (DETA) im Verhältnis 1:1.

Die Belichtungszeit beträgt 15 Sekunden. Anschließend wird, wie aus Tabelle 3 ersichtlich, ein Teil der Systeme thermisch nachgehärtet.

### 4. Tintenlagerungstest (70°C; 150 h; käufliche Tinte auf Wasser/Alkoholbasis)

Die Proben für die Tintenlagerungstests wurden unter folgenden Bedingungen hergestellt:
Feststoffanteil im Sprühlack: ca. 7 Gew.-%
Lösungsmittel: Propylacetat
Photoinitiator: Cyracure UVI 6974 (3 Massen-% bezogen auf unverdünnten Lack)
Amine: NMDA + DETA (1:1; 1 Massen-% bezogen auf unverdünnten Lacke)
Aushärtung: 60 s mit 500 W (Loctite).
Folgende Haftungswerte (=GT) und Randwinkel (gegenüber Wasser) werden vor (=Index v) und nach (=Index n) dem Tintenlagerungstest ermittelt.

**Tabelle 3**

| System | therm. Härt. | Substrat | GTᵥ | GTₙ | Winkelᵥ | Winkelₙ |
|---|---|---|---|---|---|---|
| GMP2T | 1 h/80 °C | Glas | 0 | 0 | 79° | 78° |
| | " | Wafer | 0 | 0 | | |
| | " | Parad | 0.5 | 0.5 | | |
| | " | Vacrel | 0 | 0.5 | | |
| GMP2T^{a} | 16 h/80 °C | Glas | 0.5 | 0.5 | 74° | 66° |
| | " | Wafer | 0 | 0 | | |
| | " | Parad | 0 | 0 | | |
| | " | Vacrel | 0.5 | 0.5^{b} | | |
| PM82 | - | Glas | 0 | 5 | 80° | 61° |
| | - | Wafer | 0.5 | 5 | | |
| | - | Parad | 0 | 5 | | |
| | - | Vacrel | 0 | 5 | | |
| PM82^{a} | 16 h/80 °C | Glas | 0.5 | 0.5 | | |
| | " | Wafer | 0 | 0 | | |
| | " | Parad | 0.5 | 0.5 | | |
| | " | Vacrel | 0 | 5^{b} | | |
| PM91^{a} | 16 h/80 °C | Glas | 1 | 1 | 77° | 42° |
| | " | Wafer | 0.5 | 1.5 | | |
| | " | Parad | 1 | 1.5 | | |
| | " | Vacrel | 0.5 | 4^{b} | | |
| PM73 | - | Glas | 0 | 0 | 75° | 70° |
| | - | Wafer | 0 | 0 | | |
| | - | Parad | 0 | 0.5 | | |
| | - | Vacrel | 1 | 1 | | |
| PM73^{a} | 16 h/80 °C | Glas | 1 | 1 | 72° | 91° |
| | " | Wafer | 1 | 1 | | |
| | " | Parad | 1 | 1 | | |
| | " | Vacrel | 1 | -^{c} | | |
| PP2M433 | 1 h/80 °C | Glas | 0 | 0 | 78° | 79° |
| | " | Wafer | 0 | 0 | | |
| | " | Parad | 0.5 | 0.5 | | |
| | " | Vacrel | 0 | 0 | | |
| PP2M433^{a} | 16 h/80 °C | Glas | 1 | 1 | 82° | 76° |
| | " | Wafer | 1 | 1 | | |
| | " | Parad | 1 | 1 | | |
| | " | Vacrel | 1 | 1^{b} | | |
| PP2M631 | 1 h/80 °C | Glas | 0 | 0 | 79° | 73° |
| | " | Wafer | 0 | 0 | | |
| | " | Parad | 2 | 2 | | |
| | " | Vacrel | 2 | 2 | | |

| | | | | | | |
|---|---|---|---|---|---|---|
| ^{a}: 165 h statt 150 h Tintenlagerung; | | | | | | |
| ^{b}: Haftungsproblem Vacrel-Wafer (partielle Ablösung des Vacrel); | | | | | | |
| ^{c}: Vacrel vom Wafer abgelöst, deshalb keine Haftungsbestimmung mehr möglich. | | | | | | |

Die besten Haftungswerte vor und nach dem Tintenlagerungstest zeigt das System GMP2T. Vergleichbar gute Ergebnisse liefert auch das System PP2M433, das auch einen vergleichbar hohen Randwinkel (wenn nicht sogar etwas höher) aufweist. Die größte Härte und damit wohl auch Wischbeständigkeit weist das System PM73 auf, das auch noch gute Haftung zu den unterschiedlichen Substraten besitzt.

Die besten Randwinkel (bis über 100°) erzielt man mit Zweischichtsystemen, bei denen die zweite Schicht aus einem Floursilan gebildet ist.

Die erzielte Oberflächendicke der Antitrielbeschichtung beträgt etwa 5 bis 30 *µ*m.

Eine weitere, für die Anwendung wesentliche Eigenschaft der Systeme ist ihre Planarisierungsfähigkeit von rauhen Oberflächen. Dies ermöglicht den Einsatz von nur gesägten Si-Bauteilen, d.h. der zeitaufwendige und damit kostenintensive Läpp-Prozeß bei der Herstellung der Tintenstrahldruckköpfe kann entfallen.

## Patentansprüche

1. Tintenstrahldruckkopf mit einer Antitrielschicht aus einem polymeren Werkstoff, wobei letzterer hergestellt ist unter Verwendung mindestens einer Verbindung I
XₐR_{b}SiR'_{(4-a-b)} I
mit
X = hydrolysierbare Gruppe
R = gegebenenfalls substituiertes Alkyl, Aryl, Alkenyl, Alkylaryl oder Arylalkyl,
R'= organischer Rest mit mindestens einer polymerisierbaren Gruppe,
a = 1 bis 3
b = 0 bis 2,
und wobei nach Hydrolyse von Gruppen X der Verbindung(en) I Kondensation und durch Kupplungsreaktionen von Gruppen R' der Verbindung(en) I organische Polymerisation erfolgte.

2. Tintenstrahldruckkopf nach Anspruch 1, **dadurch gekennzeichnet,**
**daß** der polymere Werkstoff hergestellt ist unter Verwendung mindestens einer Verbindung aus der Gruppe Glycidoxypropyltrimethoxysilan, Phenyltrimethoxysilan, Diphenylsilandiol und Methacryloxypropyltrimethoxysilan.

3. Tintenstrahldruckkopf nach Anspruch 2, worin der polymere Werkstoff hergestellt ist unter Verwendung von Glycidoxypropyltrimethoxysilan, Methacryloxypropyltrimethoxysilan, Diphenylsilandiol und Tetraethoxysilan.

4. Tintenstrahldruckkopf nach einem der Ansprüche 1 bis 3,
**dadurch gekennzeichnet,**
**daß** die Antitrielschicht zweischichtig ausgebildet ist.

5. Tintenstrahldruckkopf nach Anspruch 4, **dadurch**
**gekennzeichnet,**
**daß** die zweite, äußere Schicht aus Perfluoralkyltrialkoxysilan besteht oder diese Substanz enthält.

6. Tintenstrahldruckkopf nach einem der voranstehenden Ansprüche, **dadurch gekennzeichnet,**
**daß** die Antitrielschicht eine Dicke von 5 bis 50 µm besitzt.

7. Verfahren zum Herstellen antitrielbeschichteter Tintenstrahldruckköpfe, wobei ein polymerer Werkstoff auf dem Tintenstrahldruckkopf aufgetragen wird, der hergestellt ist unter Verwendung mindestens einer Verbindung
XₐR_{b}SiR'_{(4-a-b)} I
mit
X = hydrolysierbare Gruppe
R = gegebenenfalls substituiertes Alkyl, Aryl, Alkenyl, Alkylaryl oder Arylalkyl,
R'= organischer Rest mit mindestens einer polymerisierbaren Gruppe,
a = 1 bis 3
b = 0 bis 2.
wobei nach Hydrolyse von Gruppen X der Verbindung(en) I Kondensation und durch Kupplungsreaktionen von Gruppen R' der Verbindung(en) I organische Polymerisation erfolgte.

8. Verfahren nach Anspruch 7, **dadurch gekennzeichnet,**
**daß** der Werkstoff in Form eines Lacks aus der bzw. den durch Wasserzugabe vorkondensierten Ausgangsverbindung(en), ggf. mit einem Lösungsmittel, auf den Tintenstrahldruckkopf aufgebracht und anschließend photochemisch und/oder thermisch ausgehärtet wird.

9. Verfahren nach Anspruch 7 oder 8, **dadurch gekennzeichnet,**
**daß** der Werkstoff, ggf. zusammen mit einem Lösungsmittel, aufgesprüht wird.

10. Verfahren nach einem der Ansprüche 7 bis 9, **dadurch**
**gekennzeichnet,**
**daß** als Lösungsmittel Propylacetat verwendet wird.

11. Verfahren nach einem der Ansprüche 7 bis 10, **dadurch**
**gekennzeichnet,**
**daß** während des Aufsprühens durch die Tintenstrahlaustrittsöffnungen des Kopfes Inertgas gegengeleitet wird.

12. Verwendung eines polymeren Werkstoffs, der hergestellt ist unter Verwendung mindestens einer Verbindung I
XₐR_{b}SiR'_{(4-a-b)} I
mit
X = hydrolysierbare Gruppe
R = gegebenenfalls substituiertes Alkyl, Aryl, Alkenyl, Alkylaryl oder Arylalkyl,
R'= organischer Rest mit mindestens einer polymerisierbaren Gruppe,
a = 1 bis 3
b = 0 bis 2,
wobei nach Hydrolyse von Gruppen X der Verbindung(en) I Kondensation und durch Kupplungsreaktionen von Gruppen R' der Verbindung(en) I organische Polymerisation erfolgte, zum Beschichten von Tintenstrahldruckköpfen mit einer Antitrielschicht.

13. Verwendung nach Anspruch 12, **dadurch gekennzeichnet,**
**daß** der polymere Werkstoff hergestellt ist unter Verwendung mindestens einer Verbindung aus der Gruppe Glycidoxypropyltrimethoxysilan, Phenyltrimethoxysilan, Diphenylsilandiol und Methacryloxypropyltrimethoxysilan.

## Claims

1. An ink jet printing head with a hydrophobic coating of a polymeric material, whereby the latter is produced with the use of at least one compound I
XₐR_{b}SiR'_{(4-a-b)} I
where
X = hydrolysable group
R = possibly substituted alkyl, aryl, alkenyl, alkylaryl or arylalkyt
R'= organic remainder with at least one polymerisable group
a = 1 to 3
b = 0 to 2,
and whereby after hydrolysis of groups X of the compound(s) I condensation and organic polymerisation completed by coupling reactions of groups R' of the compound(s) I.

2. An ink jet printing head according to Claim 1, **characterised in that**, the polymeric material is produced with the use of at least one compound from the groups glycidoxypropyltrimethoxysilane, phenyltrimethoxysilane, diphenylsilandiol and methacryloxypropyltrimethoxysilane.

3. An ink jet printing head according to Claim 2, wherein the polymeric material is produced with the use of glycidoxypropyltrimethoxysilane, methacryloxypropyltrimethoxysilane, diphenylsilandiol and tetraethoxisilane.

4. An ink jet printing head according to one of the Claims 1 to 3,
**characterised in that**
the coating on the face of the inkjet printing head (antitriel coating) is formed from two layers.

5. An ink jet printing head according to Claim 4, **characterised in that**, the second, outer layer comprises perfluoralkyltrialkoxysilane, or contains this substance.

6. An ink jet printing head according to one of the foregoing Claims,
**characterised in that**
the antitriel coating on the face of the inkjet printing head has a thickness of 5 to 50 *µ*m.

7. A process for the production of antitriel coated ink jet printing heads, whereby a polymeric material is applied to the ink jet printing head, which is produced with the use of at least one compound
XₐR_{b}SiR'_{(4-a-b)} I
where
X = hydrolysable group
R = possibly substituted alkyl, aryl, alkenyl, alkylaryl or arylalkyl
R' = organic remainder with at least one polymerisable group
a = 1 to 3
b = 0 to 2,
and whereby after hydrolysis of groups X of the compound(s) I condensation and organic polymerisation completed by coupling reactions of groups R' of the compound(s) I.

8. A process according to Claim 7, **characterised in that**
the material, in the form of a lacquer from the precondensed starting compound(s) by the addition of water, possibly with a
solvent, is applied to the ink jet printing head and then hardened photochemically and/or thermally.

9. A process according to Claim 7 or Claim 8, **characterised in that** the material, possibly together with a solvent, is sprayed on.

10. A process according to one of the Claims 7 to 9, **characterised in that**
propylacetate is used as the solvent.

11. A process according to one of the Claims 7 to 10, **characterised in that**
during spraying an inert gas is passed through the ink jet outlet holes of the head in the opposite direction.

12. The use of a polymeric material, which is produced with the use of at least one compound I
XₐR_{b}SiR'_{(4-a-b)} I
Where
X = hydrolysable group
R = possibly substituted alkyl, aryl, alkenyl, alkylaryl or arylalkyl
R' = organic remainder with at least one polymerisable group
a = 1 to 3
b = 0 to 2,
whereby after hydrolysis of groups X of the compound(s) I condensation and organic polymerisation completed by coupling reactions of groups R' of the compound(s) I, for the coating of ink jet printing heads with an antitriel coating.

13. Use according to Claim 12, **characterised in that**
the polymeric material is produced by the use of at least one compound from the groups glycidoxypropyltrimethoxysilane, phenyltrimethoxysilane, diphenylsilandiol and methacryloxypropyltrimthoxysilane.

## Revendications

1. Tête d'impression à jet d'encre avec un revêtement hydrophobe en un matériau polymère, dans laquelle ce dernier est fabriqué en utilisant au moins une combinaison I
XₐR_{b}SiR'_{(4-a-b)} I
avec
X = groupe hydrolysable
R = alkyle, aryle, alcényle, aryle d'alkyle ou alkyle d'aryle, éventuellement substitué,
R' = reste organique avec au moins un groupe polymérisable,
a = 1 à 3
b = 0 à 2,
et dans laquelle, après hydrolyse de groupes X de la ou des combinaisons I, il s'est effectué une condensation et, par réactions de couplage de groupes R' de la ou des liaisons I, il s'est effectué une polymérisation organique.

2. Tête d'impression à jet d'encre selon la revendication 1, **caractérisée en ce que** le matériau polymère est fabriqué en utilisant au moins une combinaison du groupe : triméthoxysilane de glycidoxypropyle, triméthoxysilane de phényle, silanediol de diphényle et triméthoxysilane d'oxypropyle méthacrylique.

3. Tête d'impression à jet d'encre selon la revendication 2, dans laquelle le matériau polymère est fabriqué en utilisant : du triméthoxysilane de glycidoxypropyle, du triméthoxysilane d'oxypropyle méthacrylique, du silanediol de diphényle et du tétraéthoxysilane.

4. Tête d'impression à jet d'encre selon l'une des revendications 1 à 3, **caractérisée en ce que** le revêtement hydrophobe est conçu en deux couches.

5. Tête d'impression à jet d'encre selon la revendication 4, **caractérisée en ce que** la deuxième couche, externe, est en trialcoxysilane d'alkyle perfluorique ou contient cette substance.

6. Tête d'impression à jet d'encre selon l'une des revendications précédentes, **caractérisée en ce que** le revêtement hydrophobe a une épaisseur de 5 à 50 *µ*m.

7. Procédé de fabrication de têtes d'impression à jet d'encre avec revêtement hydrophobe, dans lequel on applique sur la tête d'impression à jet d'encre un matériau polymère qui est fabriqué en utilisant au moins une combinaison
XₐR_{b}SiR'_{(4-a-b)} I
avec
X = groupe hydrolysable
R = alkyle, aryle, alcényle, aryle d'alkyle ou alkyle d'aryle, éventuellement substitué,
R' = reste organique avec au moins un groupe polymérisable,
a = 1 à 3
b = 0 à 2,
et dans lequel, après hydrolyse de groupes X de la ou des combinaisons I, il s'est effectué une condensation et, par réactions de couplage de groupes R' de la ou des liaisons I, il s'est effectué une polymérisation organique.

8. Procédé selon la revendication 7, **caractérisé en ce qu'**on applique sur la tête d'impression à jet d'encre le matériau sous la forme d'un vernis de la ou des combinaisons de sortie précondensées par addition d'eau, éventuellement avec un solvant, et on effectue ensuite un durcissement photochimique et/ou thermique.

9. Procédé selon la revendication 7 ou 8,
**caractérisé en ce qu'**on applique le matériau par aspersion, éventuellement conjointement à un solvant.

10. Procédé selon l'une des revendications 7 à 9, **caractérisé en ce qu'**on utilise comme solvant de l'acétate propylique.

11. Procédé selon l'une des revendications 7 à 10, **caractérisé en ce que**, pendant l'aspersion, on introduit en sens contraire un gaz inerte à travers les orifices de sortie de jet d'encre de la tête.

12. Utilisation d'un matériau polymère qui est fabriqué en utilisant au moins une combinaison I
XₐR_{b}SiR'_{(4-a-b)} I
avec
X = groupe hydrolysable
R = alkyle, aryle, alcényle, aryle d'alkyle ou alkyle d'aryle, éventuellement substitué,
R' = reste organique avec au moins un groupe polymérisable,
a = 1 à 3
b = 0 à 2,
et dans lequel, après hydrolyse de groupes X de la ou des combinaisons I, il s'est effectué une condensation et, par réactions de couplage de groupes R' de la ou des liaisons I, il s'est effectué une polymérisation organique, pour recouvrir d'un revêtement hydrophobe des têtes d'impression à jet d'encre.

13. Utilisation selon la revendication 12,
**caractérisée en ce que** le matériau polymère est fabriqué en utilisant au moins une combinaison du groupe : triméthoxysilane de glycidoxypropyle, triméthoxysilane de phényle, silanediol de diphényle et triméthoxysilane d'oxypropyle méthacrylique.
